# FASCICULE DE BREVET EUROPEEN

(11) **EP 3 692 624 B1**
(45) Date de publication et mention de la délivrance du brevet: **15.02.2023**
(21) Numéro de dépôt: 18793452.6
(22) Date de dépôt: 04.10.2018
(51) Int. Cl.: H02M 7/00, H02G 5/00, H01F 27/28, B05D 1/02, B05D 1/16, H01F 41/12, H01R 25/16, H02B 1/20

(54) **CONNECTEUR MULTICOUCHE A CONDUCTEURS ISOLES PAR EMAILLAGE**
MEHRLAGIGER VERBINDER MIT EMAILLE-ISOLIERTEN LEITERN
MULTILAYER CONNECTOR WITH ENAMEL ISOLATED CONDUCTORS

(30) Priorité: 06.10.2017 FR 1759370
(43) Date de publication de la demande: 12.08.2020
(73) Titulaire: Auxel, 59147 Gondecourt (FR); Université d'Artois, 62030 Arras (FR)
(72) Inventeur: ROGER, Daniel, 62162 Wimille (FR); WECXSTEEN, Jean-François, 62400 Béthune (FR); DUCHESNE, Stéphane, 62660 Beuvry (FR); VELU, Gabriel, 62890 Audrehem (FR)
(74) Mandataire: Matkowska, Franck
(86) Numéro de dépôt international: PCT/FR2018/000231
(87) Numéro de publication internationale: WO 2019/068969

(56) Documents cités:
- CN-A- 106 298 098
- CN-U- 203 607 685
- CN-U- 205 264 989
- FR-A1- 2 590 105
- US-A- 4 885 187
- US-A1- 2003 113 441
- US-A1- 2015 003 019
- US-B1- 6 265 666

## Description

### Domaine technique de l'invention

L'invention se rapporte au domaine technique des installations électriques, des conducteurs et de la distribution de puissance, ainsi qu'au domaine des appareils et méthodes pour la fabrication de tels dispositifs.

Plus particulièrement, l'invention concerne entre autres d'une part un connecteur multicouche encore appelé « busbar » laminé isolé électriquement et d'autre part le procédé de fabrication dudit connecteur.

### Art antérieur

On entend usuellement par « busbar laminé » un dispositif d'interconnexion électrique, qui a pour fonctions de raccorder électriquement des éléments constitutifs d'un convertisseur statique d'énergie électrique ; mais aussi d'assurer la connectique de raccordement prévue à l'extérieur dudit convertisseur.

Ce raccordement intervient dans plusieurs contextes par exemple :
- entre des modules de puissance comme : des transistors bipolaire à grille isolée (IGBT : Insulated Gate Bipolar Transistor), des thyristors commuté à gâchette intégrée (IGCT : Integrated gate-commutated thyristor), des diodes, et des composants passifs comme des condensateurs ou des filtres ; mis en oeuvre au sein de ce convertisseur statique d'énergie électrique, notamment dans la gamme de puissance typique allant de 50kW (kilowatt) à 8 MW (mégawatt),
- lorsque le « busbar » est directement encapsulé à l'intérieur des modules de puissances : entre des circuits semi-conducteurs, et/ou entre des circuits semi-conducteurs et des connexions externes (bornes de raccordement), notamment dans la gamme de puissance typique allant de 50kW (kilowatt) à 200 kW (kilowatt).

Le connecteur multicouche laminé a également pour fonction de supporter mécaniquement les divers éléments en jeu.

Les connecteurs laminés sont, de manière générale, constitués d'un complexe de conducteurs plats et de matériau(x) isolant(s). Néanmoins, un « busbar » peut aussi être constitué d'un unique conducteur plat.

On entend par conducteur plat, un conducteur tel que l'une de ses dimensions (préférentiellement son épaisseur) est beaucoup plus faible que les autres. Un tel conducteur peut être plan ou coudé.

Cet empilement de conducteurs plats de différentes phases électriques justifie la principale raison d'être du connecteur laminé par rapport à des barres de connexions ou des câbles électriques classiques ; à savoir une inductance faible.

A titre d'exemple, un connecteur laminé peut consister en un assemblage de plusieurs plaques conductrices, chaque plaque correspondant à une phase électrique. Des lumières pratiquées dans les plaques permettent le raccordement des composants disposés sur une face avec les autres plaques situées en dessous. Les composants sont le plus souvent montés par vissage. Ils existent aussi des pattes de connexions permettant le raccordement avec l'extérieur du convertisseur.

Le plus souvent, l'isolation électrique entre les différents plaques conductrices est réalisées par des films isolants électriques de type polyéthylène téréphtalate (PET), polynaphtalate d'éthylène) (PEN), polyimide (PI) ...

Usuellement, le(s)dit(s) film(s) isolant(s) est soit empilé (intercalé entre des conducteurs, on parle de « busbar » laminé empilé ou « stacké »), soit contrecollé sur le conducteur plat (busbar laminé contrecollé).

Ces technologies présentent plusieurs désavantages présentés ci-après.

Dans le cas d'un « busbar » « stacké » ou empilé, les films ne sont pas collés, et il faut prévoir un dispositif de maintien géométrique de ses éléments au moins jusqu'à son montage dans le convertisseur. Ce dispositif se présente généralement sous forme de pièces de fixation additionnelles en matériau isolant électrique. Par ailleurs, les distances d'isolement dans l'air limitent le niveau de tension de service de convertisseurs confectionnés à base de tels connecteurs (à environ 1000 volts).

Dans le cas du contrecollage, les feuilles sont le plus souvent thermocollées, ce qui nécessite par exemple l'emploi d'une presse chauffante, d'un outil conformateur et de membranes souples de répartition de pression. Un tel appareil consomme beaucoup d'énergie, ce qui représente un inconvénient technique majeur. En effet, seulement environ 1% de l'énergie consommée sert à solidariser les conducteurs plats et le(s) film(s), le reste de l'énergie étant dissipée au niveau de la carcasse métallique de la presse et de l'outil.

Dû à l'inertie thermique du système et à la barrière thermique formée par les membranes souples, le temps de production est également long (de l'ordre de 1 à 2 heures) et donc la productivité horaire faible ; alors que les besoins futurs en convertisseurs statiques sont en hausse (énergies renouvelables, véhicules électriques, smart-grid, ...)

Un autre problème technique rencontré lors du contrecollage de films isolants concerne la qualité d'isolation du dispositif et plus spécifiquement la qualité d'isolation de ses bordures (périphérie du conducteur, bords des ouvertures prévues dans les conducteurs...). En effet, idéalement, les « busbars » laminés avec film thermocollé se fabriquent à plat et sont ensuite pliés si besoin. Le pliage postérieur présente des risques multiples : fissuration du film, fissuration du revêtement de surface (par exemple : nickelage). De plus, lors de la pose des film(s) isolant(s), il faut prendre garde de ne pas créer de poche d'air (cavité remplie d'air entre le film et le conducteur) ou d'interstices (film mal collé ou décollé) aux bordures, car de tels défauts génèrent l'apparition de phénomènes parasites et hautement préjudiciables tels que des phénomènes de décharges partielles (d'autant plus importantes que le champ diélectrique est élevé), qui provoquent à échéance plus ou moins longue le perçage du film isolant, et par suite l'apparition de court-circuits. La conception de connecteurs multicouches présentant un seuil d'apparition de décharges partielles élevé est donc hautement désirable.

Par ailleurs, le besoin croissant de rapidité au niveau des circuits nécessite la mise en oeuvre de composants électroniques adéquats et de plus en plus performants, par exemple à base de carbure de silicium ou nitrure de gallium. Ceux-ci introduisent des contraintes sévères pour les « busbars », telles que :
- des valeurs d'inductance requises encore plus faibles que celles actuellement atteintes,
- une aptitude à supporter une tension de fonctionnement supérieure aux tensions actuellement rencontrées,
- une aptitude à supporter un courant commuté supérieur aux courants commutés actuellement rencontrés,
- une aptitude à supporter une température de fonctionnement supérieure aux températures actuellement atteintes.

Ainsi, afin de répondre aux contraintes précédemment évoquées, on utilise actuellement des film(s) de matériaux de plus en plus performant, par exemple des films en PolyEtherEtherKetone (PEEK) ou en Polyimide (PI), mais qui sont beaucoup plus coûteux. Egalement, la montée en température pose le problème de trouver des films et des adhésifs résistants à celle-ci.

Egalement, l'avantage technique principal de ces dispositifs, à savoir : une inductance faible (par comparaison à un câblage traditionnel), est une conséquence de leur forme aplatie. Ainsi, de manière évidente, l'évolution technologique actuelle repose sur le principe de la réduction d'échelle : il est connu d'atteindre des valeurs d'inductance de plus en plus faibles en réduisant l'épaisseur des conducteurs et des films d'isolation. Cette solution présente néanmoins une limite évidente, puisque des films plus fins sont aussi plus fragiles et délicats à manipuler et/ou coller.

Sachant en outre qu'une inductance faible permet de limiter les surtensions pendant les commutations du courant dans les interrupteurs électroniques et qu'un seuil d'apparition de décharges partielles de plus en plus élevé est requis, il est d'autant plus évident que l'amélioration des performances des connecteurs multicouches, par le choix de matériaux performants, facilement déposables et peu onéreux, est un challenge technique d'importance pour l'industrie.

On connait également ( CN205264989) l'isolation des conducteurs par dépôt de poudre isolante colorée thermodurcissable (par exemple époxyde) qui après cuisson forme une barrière isolante. L'épaisseur minimale de la couche d'isolant obtenu est de l'ordre de 100 microns. Malheureusement la barrière isolante peut se fissurer ou craqueler ce qui engendre des défauts d'isolation. Ce phénomène étant courant, les fabricants ajoutent un film souple isolant. On connait US 6265666 la mise en place d'une couche isolante obtenue par pulvérisation électrostatique d'une poudre thermoplastique.

### Description de l'invention

Comme démontré précédemment, il existe un réel besoin d'apporter une solution en réponse au problème technique de l'amélioration de l'isolation des conducteurs plats constitutifs des connecteurs multicouches laminés (notamment aux bordures) et de l'application du matériau isolant choisi, tout en conservant un coût de fabrication raisonnable et en augmentant la productivité.

L'invention décrite dans la présente demande répond à ce besoin, en proposant une solution économiquement attrayante et des performances accrues pour les connecteurs multicouches produits selon la méthode prescrite, qui s'affranchit de l'usage de films.

Pour ce faire, l'invention concerne tout d'abord un procédé de fabrication d'un dispositif connecteur apte entre autres à réaliser une connexion inter ou intra convertisseur(s) statique(s) d'énergie électrique (circuits modules de puissance, condensateurs, filtres, connecteurs, ...), ledit dispositif comprenant au moins deux conducteurs plats et au moins un matériau isolant, ledit procédé étant remarquable en ce que :
- on prépare chaque conducteur plat individuellement,
- on dépose sur chaque conducteur une couche de vernis d'émaillage sous forme liquide d'épaisseur inférieure à l'épaisseur finale souhaitée,
- on procède à la réticulation de la couche de vernis d'émaillage,
- on recommence la dépose d'une couche de vernis d'émaillage sous forme liquide et la réticulation jusqu'à atteindre l'épaisseur choisie,
- on assemble les conducteurs dudit dispositif connecteur au moyen d'un gabarit et de moyens de liaison.

Pour préparer les conducteurs, on commence par effectuer un traitement de surface tel un dégraissage et/ou une désoxydation.

Ensuite on pose une épargne sur chaque zone du conducteur où doit s'établir un contact électrique avant de déposer le vernis sous forme liquide.

Ces épargnes sont par exemple choisies dans le groupe comprenant : bouchons (par exemple : en matière élastique résistant à la chaleur, et/ou étanches, et/ou fixés mécaniquement, et/ou en matière non adhérente), adhésifs (par exemple : adhésifs pelables). Les épargnes peuvent être toutes de même nature ou être panachées. Elles peuvent être réutilisables ou à usage unique. Néanmoins, l'Homme du Métier sait choisir la nature des épargnes, et leur nombre en fonction des besoins du dispositif à fabriquer.

Les conducteurs peuvent être suspendus à un support ou maintenu via la ou les épargne(s), le temps nécessaire à la pose du vernis et à sa réticulation.

Pour la pose du vernis d'émaillage, celle-ci se fait par exemple par projection en fines couches utilisant l'air comme véhicule porteur du vernis ou en projetant uniquement le vernis d'émaillage sous forme liquide en microgouttelettes donc par pulvérisation.

La pose peut également se faire par trempage ou aspersion de vernis, la viscosité du vernis d'émaillage qui est sous forme liquide et la rugosité du conducteur dictant alors l'épaisseur de la couche déposée.

La pose peut également se faire par enduction centrifuge au moyen d'une tournette mettant en rotation à grande vitesse le conducteur à émailler. L'épaisseur finale de la couche isolante déposée est fonction de la quantité de matière isolante initiale, de sa viscosité et des conditions de rotation (durée, vitesse de rotation et accélération)

En déposant de fines couches on diminue le risque d'un manque accidentel localisé de vernis car les couches sont déposées indépendamment les unes des autres. On diminue le risque de microcavité la réticulation se fait selon la nature du vernis.

La réticulation peut se faire par évaporation de solvant ou par réaction chimique avec un agent durcisseur. Un apport thermique enclenche ou accélère le plus souvent cette réticulation. La réticulation peut se faire également par UV pour les résines photo-sensibles.

Dans une variante de réalisation, les couches peuvent ne pas être de même épaisseurs, ni de même type de résine. Par exemple, le vernis de la première couche fine peut être de nature polyuréthane, caractérisé par une bonne accroche sur une surface cuivre, et les suivantes en vernis de type époxy plus résistantes. Et la dernière en vernis chargé en pigments colorés.

Les conducteurs peuvent être préparés un par un ou par lot selon les moyens utilisés pour déposer le vernis.

Lorsque les conducteurs sont prêts, il faut les assembler.

Pour les assembler, on utilise un gabarit de montage qui va permettre de positionner les connecteurs les uns par rapport aux autres et d'immobiliser les conducteurs les uns par rapport aux autres.

Suivant une première réalisation, on fait appel à des composants mécaniques (vis , clip, insert, rivet..) en matériau isolant.

Selon une seconde réalisation, on fait appel à des adhésifs sous toutes les formes, par exemple : plots de colle, couche de colle, film adhésif.

Dans une variante de réalisation, on insère entre deux conducteurs précédemment couverts d'un vernis émaillé des espaceurs en matériau isolant tel une feuille de mica ou un mat de fibres de verre. On peut également utiliser une feuille en silicone que l'on dira épaisse (1 à 5 mm, typiquement 3 mm) afin de compenser des différences d'épaisseur.

Préférentiellement, le gabarit de montage présente des moyens de calage latéral des conducteurs.

L'invention concerne également tout dispositif connecteur qu'il est possible d'obtenir par la mise en oeuvre du procédé décrit. Ledit dispositif connecteur est entre autre apte à réaliser une connexion inter ou intra convertisseur(s) statique(s) d'énergie électrique (circuits modules de puissance, condensateurs, filtres, connecteurs, ...), c'est-à-dire qu'il est apte et susceptible d'être employé afin de réaliser une connexion :
- Intra-convertisseur, c'est-à-dire par exemple :
   o entre au moins deux modules de puissance (tels que définis précédemment) appartenant à un même convertisseur, ou
   o à l'intérieur d'un module de puissance, par exemple : entre au moins deux puces semi-conductrices, ou entre une puce semi-conductrice et une connexion externe, ou
- Inter-convertisseurs, c'est-à-dire par exemple entre au moins deux convertisseurs.

Comme décrit auparavant, les dispositifs (busbar) sont, de manière générale, constitués d'un complexe de conducteurs plats et de matériau(x) isolant(s).

Selon l'invention, les conducteurs plats sont préférentiellement en cuivre ou en aluminium. Avantageusement (mais non obligatoirement) les conducteurs sont protégés par un traitement de surface, tel que entre autres : étamage, nickelage, argenture. Préférentiellement, les conducteurs ont une épaisseur comprise entre 1 et 4 millimètres.

Le procédé de fabrication des conducteurs (par exemple : poinçonnage, pliage, injection, coulage) importe peu, et l'Homme du Métier sait choisir le procédé le plus adapté à l'application visée.

Enfin, l'invention est employable à des fins diverses, telles que les busbars laminés de convertisseur statique d'énergie électriques, les busbars laminés internes de modules semi-conducteurs de puissance, et le Déposant revendique notamment l'utilisation du dispositif connecteur proposé, obtenu par la mise en oeuvre du procédé présenté, en tant que connecteur inter ou intra convertisseur(s) statique(s) d'énergie électrique.

En résumé, l'invention est définie par les caractéristiques de la revendication de procédé 1, de la revendication de dispositif 11 et de la revendication d'utilisation 14. Les revendications dépendantes indiquent des modes de réalisation avantageux de l'invention.

### Description des dessins

L'invention sera bien comprise à l'aide de la description ci-après (à titre d'exemple non limitatif) des dessins illustrant le dispositif d'interconnexion et le procédé de fabrication associé.
La figure 1 représente deux conducteurs indépendants, pourvus d'épargnes de protection des zones de connexions électriques.
La figure 2 représente deux conducteurs, toujours indépendants et qui ont subi les opérations d'émaillage prévues par le procédé. Les épargnes ont été retirées. Une coupe agrandie montre le détail de l'empilement des couches de vernis.
La figure 3 montre les deux conducteurs précédemment émaillés et assemblés par des plots de colle, pour former le connecteur multicouche à conducteurs isolés par émaillage.

### Description de modes généraux de réalisation de l'invention

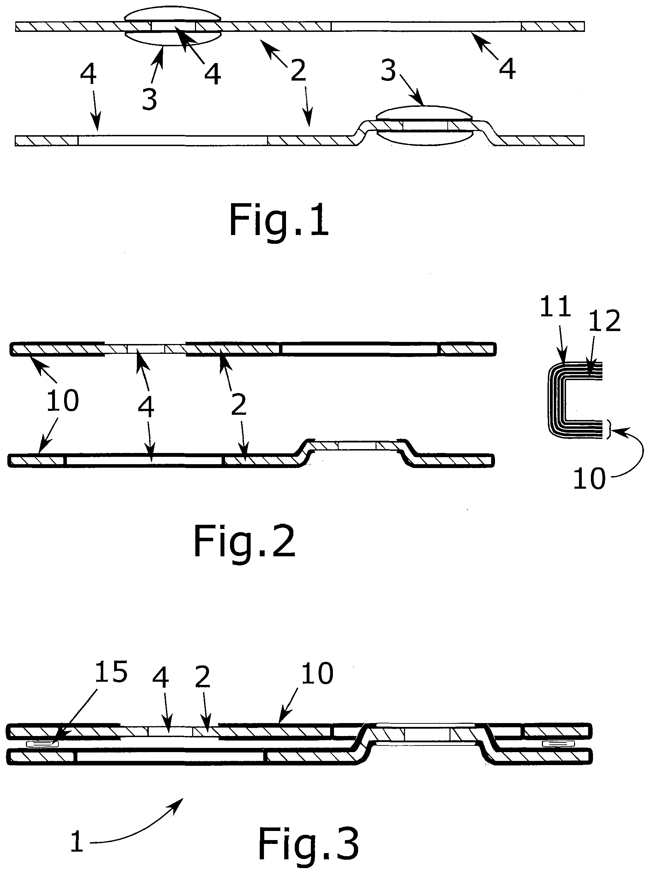

Conformément aux figures, le procédé selon l'invention permet la fabrication d'un dispositif connecteur multicouches 1. Ce dispositif 1, conformément à la figure 1, est fabriqué à partir d'au moins un conducteur plat 2, sur lequel on pose éventuellement une épargne 3 en chaque zone dudit conducteur 2 où doit s'établir un contact électrique. L'épargne 3 peut être déposée sur une face du conducteur 2, ou être traversante, au niveau d'une lumière 4 réalisée dans ledit conducteur 2. Selon le procédé de fabrication, la pose de(s) épargne(s) s'effectue avant de déposer le vernis (10). Conformément à la figure 2, on dépose une ou plusieurs couches (11, 12) de vernis d'émaillage 10 sur les conducteurs 2 préparés et éventuellement munis d'épargnes 3. Une fois les épargnes 3 enlevées, on obtient par exemple des lumières 4 dont les bords sont recouverts de vernis (lumière 4 avec bord épais sur le conducteur 2 du bas), et des lumières dont les bords ont été protégés d'un recouvrement par vernis grâce aux épargnes 3 (lumière 4 avec bord fin sur le conducteur 2 du haut).

Préférentiellement, chaque conducteur est enrobé individuellement d'au moins deux couches de vernis d'émaillage 10 sous forme liquide, les couches ultérieures à la précédente sont créées que si la couche précédente est réticulée.

On entend par vernis d'émaillage 10, une résine qui présente des aptitudes particulières d'adhérence sur le conducteur électrique, de résistance électrique, de stabilité thermique.

Tout à fait préférentiellement, le vernis d'émaillage 10 comprend au moins un agent de charge sous forme de particules inorganiques de taille préférentiellement inférieure à 150 µm, telles que par exemple : la silice (SiO2), l'alumine (Al2O3), la magnésie (MgO). Grâce à cet agent de charge inorganique, la résine présente une altération moindre de ses caractéristiques électriques sous contraintes de décharges partielles.

Cette possibilité technique permet d'obtenir une durée de vie maitrisée en présence de décharges partielles, contrairement à la technologie actuelle qui requiert l'absence de décharges partielles.

Avantageusement, les paramètres caractéristiques dudit vernis d'émaillage 10 sont choisis parmi :
- viscosité dynamique : 100 à 4000 mPa.s, et/ou
- classe de température : 120°C à 240°C (120 / 140 / 155 / 180 / 200 / 220 / 240°C),suivant la norme IEC 60085 : 2007, et/ou
- rigidité diélectrique supérieure ou égale à 30 kV/mm, et/ou
- plus préférentiellement la nature chimique est choisie parmi : polyuréthane (PUR), élastomère thermoplastique (TPE).

A titre d'exemple, le vernis d'émaillage 10 peut être choisi parmi la gamme VOLTATEX WIRE^{®} (Dupont).

Le vernis 10 d'émaillage peut être réticulé par l'action de la chaleur ou par l'action des rayons Ultra Violet. Pour ces derniers, on peut retenir à titre d'exemple la société Green Isolight International :
- le GII 206 qui a une classe de 280°C et qui est à base de polyester acrylate;
- le GII 200 qui a une classe de 120°C et qui est poly-alcool modifié acrylate.

Pour la pose du vernis 10, le conducteur 2 peut par exemple être suspendu au moyen d'un crochet s'agrippant au niveau d'une épargne 3.

Le vernis 10 peut alors être projeté sur le conducteur 2.

La projection peut être réalisée sous forme de fines particules, par effet aérosol au moyen d'un gaz propulseur (air ou gaz neutre comme l'azote par exemple) ou par pression.

On peut également tremper le conducteur 2 dans un bain ou l'asperger de vernis 10. Une autre possibilité consiste à déposer le vernis par enduction centrifuge. De préférence, on procède par dépôt de couches fines pour ainsi multiplier celles-ci. L'Homme de métier saura déterminer les paramètres nécessaires pour réaliser les épaisseurs souhaitées en fonction des caractéristiques des vernis employés. Préférentiellement, selon le procédé, l'étape d'assemblage dudit dispositif 1 comprend au moins une étape parmi : étape(s) de collage, étape(s) de bridage mécanique.

Le collage (étape de collage) comprend par exemple : collage par presse et/ou collage à chaud et s'effectue à l'aide d'une colle telle que : adhésif à film transfert, colle liquide.

Avantageusement, le procédé selon l'invention est remarquable en ce que :
- tout d'abord on dépose une couche de résine d'émaillage 10 d'épaisseur A, préférentiellement par trempage suivi d'un égouttage (néanmoins, toute autre méthode adaptée - en fonction du vernis 10 choisi - peut être mise en oeuvre, telle qu'un dépôt par pulvérisation ou centrifugation),
- ensuite on réticule ledit vernis d'émaillage 10 et on répéte la dépose et la réticulation.

L'Homme du métier sait choisir le nombre d'itération du cycle d'étape présenté auparavant, de façon à obtenir une épaisseur désirée finale B de vernis d'émaillage 10, enrobant lesdits conducteurs plats 2. Entre autres, le nombre d'itérations (et donc l'épaisseur finale B) est choisi en fonction de la tension que le dispositif 1 doit supporter.-

Préférentiellement, ladite épaisseur B est comprise entre 30 et 200 microns, afin de permettre au dispositif de fonctionner à une tension comprise entre 300 et 1250 volts. Préférentiellement, ladite épaisseur A est comprise entre 3 et 15 microns.

Un premier intérêt de ces différentes étapes A de dépôt de résine (vernis) d'émaillage 10 est d'éviter la création de microcavités dans l'épaisseur de l'isolant (toute microcavité étant susceptible de devenir le siège de décharges partielles préjudiciables à la pérennité des performances électriques de l'isolant et/ou de l'isolation).

Un deuxième intérêt est de diminuer le risque d'un manque accidentel localisé de vernis 10 car les couches sont déposées indépendamment les unes des autres. Un troisième sera de profiter de caractéristiques propres à chaque type de vernis 10, par exemple une première couche avec une aptitude d'adhérence élevée sur les surfaces conductrices, une couche suivante avec des performances mécaniques plus élevée, ou encore une couche de vernis 10 coloré d'identification (par exemple : vernis incluant des pigments colorés ; cette possibilité technique permet une identification sans ambigüité d'une couche conductrice par rapport à une autre).

La réticulation du vernis d'émaillage 10 peut par exemple s'effectuer spontanément à température ambiante ou dans une étuve, par évaporation de solvant, par réaction chimique avec un agent durcisseur, ou sous l'action d'un rayonnement UV.

Selon une variante du procédé, les différentes couches de vernis 10 déposées sont de nature et/ou d'épaisseurs différentes.

Avantageusement, selon une variante (étape d'assemblage) du procédé, on assemble les conducteurs 2 revêtus de vernis 10 émaillé au moyen de pièces mécaniques en matériau isolant.

Selon une autre variante (étape d'assemblage) du procédé, on assemble les conducteurs 2 revêtus de vernis 10 émaillé au moyen d'adhésif sous toutes les formes.

Préférentiellement, comme prévu à la figure 3, on insère entre deux conducteurs 2 revêtus de vernis 10 émaillé un (ou des) espaceurs isolants, tel qu'une feuille de matière isolante 15 (par exemple en mica).

Avantageusement, le procédé selon l'invention est remarquable en ce que dans des variantes avancées de l'étape de préparation des conducteurs plats 2, celle-ci comprend en outre au moins une étape de préparation des surfaces, choisie par exemple entre autres parmi : dégraissage, dépoussiérage.

Egalement, le procédé proposé permet d'envisager plus aisément une démarche écologique globale, en offrant la possibilité d'utiliser des solvants aqueux en lieux et place des solvants organiques dans les vernis.

Enfin, l'invention concerne tout dispositif obtenu via le procédé précédemment décrit, comportant au moins deux conducteurs plats 2 et au moins un matériau isolant : vernis 10 (sous forme multicouches), espaceur 15.

## Revendications

1. Procédé de fabrication d'un dispositif connecteur (1) apte à réaliser une connexion inter ou intra convertisseur(s) statique(s) d'énergie électrique, ledit dispositif (1) comprenant au moins deux conducteurs plats (2) et au moins un matériau isolant (10, 11, 12, 15), ledit procédé étant remarquable en ce que :
● on prépare chaque conducteur plat (2) individuellement,
● on dépose sur chaque conducteur (2) une couche de vernis d'émaillage (10) sous forme liquide d'épaisseur inférieure à l'épaisseur finale souhaitée,
● on procède à la réticulation de la couche de vernis d'émaillage (10),
● on recommence la dépose d'une couche de vernis d'émaillage (10) sous forme liquide et la réticulation jusqu'à atteindre l'épaisseur choisie,
● on assemble les conducteurs (2), revêtus de vernis (10), dudit dispositif connecteur (1) au moyen d'un gabarit et de moyens de liaison.

2. Procédé de fabrication d'un dispositif connecteur (1) selon la revendication 1 **caractérisé en ce qu'**on pose une épargne (3) sur chaque zone du conducteur (2) où doit s'établir un contact électrique avant de déposer le vernis (10) sous forme liquide.

3. Procédé de fabrication d'un dispositif connecteur (1) selon l'une des revendications précédentes **caractérisé en ce qu'**on dépose la couche de vernis (10) en fines particules, en utilisant un gaz comme propulseur, ou par pression.

4. Procédé de fabrication d'un dispositif connecteur (1) selon l'une des revendications 1 ou 2, **caractérisé en ce qu'**on dépose la couche de vernis (10) par trempage ou aspersion.

5. Procédé de fabrication d'un dispositif connecteur (1) selon l'une des revendications 1 ou 2, **caractérisé en ce que** l'on dépose la couche de vernis (10) par enduction centrifuge.

6. Procédé de fabrication d'un dispositif connecteur (1) selon l'une quelconque des revendications précédentes, **caractérisé en ce que** l'on procède à une réticulation du vernis (10), par exemple par évaporation de solvant ou par réaction chimique avec un agent durcisseur ou par action des UV.

7. Procédé de fabrication d'un dispositif connecteur (1) selon l'une quelconque des revendications précédentes, **caractérisé en ce que** les différentes couches de vernis (10) déposées sont de nature et/ou d'épaisseurs différentes.

8. Procédé de fabrication d'un dispositif connecteur (1) selon l'une quelconque des revendications précédentes, **caractérisé en ce qu'**on assemble les conducteurs (2) revêtus de vernis (10) émaillé au moyen de pièces mécaniques en matériau isolant.

9. Procédé de fabrication d'un dispositif connecteur (1) selon l'une quelconque des revendications 1 à 7, **caractérisé en ce qu'**on assemble les conducteurs (2) revêtus de vernis (10) émaillé au moyen d'adhésif sous toutes les formes.

10. Procédé de fabrication d'un dispositif connecteur (1) selon l'une quelconque des revendications 1 à 9, **caractérisé en ce qu'**on insère entre deux conducteurs (2) revêtus de vernis émaillé une feuille de matière isolante (15).

11. Dispositif connecteur (1) apte à réaliser une connexion inter ou intra convertisseur(s) statique(s) d'énergie électrique, ledit dispositif (1) comprenant au moins deux conducteurs plats (2) et au moins un matériau isolant, ce dispositif (1) étant **caractérisé en ce qu'**il est obtenu selon l'une quelconque des revendication 1 à 10 et comporte au moins deux couches (11; 12) superposées de vernis d'émaillage (10).

12. Dispositif connecteur selon la revendication 11, **caractérisé en ce que** le vernis d'émaillage (10) comprend au moins un agent de charge sous forme de particules inorganiques.

13. Dispositif connecteur (1) selon la revendication 11 ou 12, **caractérisé en ce que** le vernis d'émaillage (10) comprend des pigments colorés.

14. Utilisation du dispositif connecteur (1) selon l'une des revendications 11 à 13 ou du dispositif connecteur (1) obtenu au moyen du procédé selon l'une quelconque des revendications 1 à 10, en tant que connecteur inter ou intra convertisseur(s) statique(s) d'énergie électrique.

## Patentansprüche

1. Verfahren zur Herstellung einer Verbindungsvorrichtung (1), die geeignet ist, eine Verbindung zwischen statischen Stomrichtern oder innerhalb eines statischen Stomrichters für elektrische Energie herzustellen, wobei die Vorrichtung (1) mindestens zwei flache Leiter (2) und mindestens ein isolierendes Material (10, 11, 12, 15) umfasst, wobei das Verfahren **dadurch gekennzeichnet ist, dass**:
- jeder flache Leiter (2) einzeln vorbereitet wird,
- auf jeden Leiter (2) eine Schicht aus Emaillierlack (10) in flüssiger Form aufgebracht wird, deren Dicke geringer ist als die gewünschte Enddicke,
- die Schicht aus Emaillierlack (10) vernetzt wird,
- man das Aufbringen einer Schicht Emaillierlack (10) in flüssiger Form und die Vernetzung wiederholt, bis man die gewünschte Enddicke erreicht hat,
- die mit Lack (10) überzogenen Leiter (2) der Verbindungsvorrichtung (1) mittels einer Schablone und Verbindungsmitteln zusammengebaut werden.

2. Verfahren zur Herstellung einer Verbindungsvorrichtung (1) nach Anspruch 1, **dadurch gekennzeichnet, dass** auf jedem Bereich des Leiters (2), in dem ein elektrischer Kontakt hergestellt werden soll, eine Abdeckvorrichtung (3) angebracht wird, bevor der Lack (10) in flüssiger Form aufgetragen wird.

3. Verfahren zur Herstellung einer Verbindungsvorrichtung (1) nach einem der vorhergehenden Ansprüche, **dadurch gekennzeichnet, dass** die Schicht aus Lack (10) in feinen Partikeln unter Verwendung eines Gases als Treibmittel oder durch Druck aufgetragen wird.

4. Verfahren zur Herstellung einer Verbindungsvorrichtung (1) nach einem der Ansprüche 1 oder 2, **dadurch gekennzeichnet, dass** man die Schicht aus Lack (10) durch Tauchen oder Spritzen aufträgt.

5. Verfahren zur Herstellung einer Verbindungsvorrichtung (1) nach einem der Ansprüche 1 oder 2, **dadurch gekennzeichnet, dass** die Schicht aus Lack (10) durch Schleuderbeschichten aufgebracht wird.

6. Verfahren zur Herstellung einer Verbindungsvorrichtung (1) nach einem der vorhergehenden Ansprüche, **dadurch gekennzeichnet, dass** das Vernetzen des Lacks (10) z.B. durch Verdampfen von Lösungsmittel oder durch chemische Reaktion mit einem Härter oder durch UV-Einwirkung erfolgt.

7. Verfahren zur Herstellung einer Verbindungsvorrichtung (1) nach einem der vorhergehenden Ansprüche, **dadurch gekennzeichnet, dass** die einzelnen aufgetragenen Schicht aus Lack (10) von unterschiedlicher Art und/oder Dicke sind.

8. Verfahren zur Herstellung einer Verbindungsvorrichtung (1) nach einem der vorhergehenden Ansprüche, **dadurch gekennzeichnet, dass** die mit Emaillierlack (10) beschichteten Leiter (2) mit Hilfe von mechanischen Teilen aus isolierendem Material zusammengesetzt werden.

9. Verfahren zur Herstellung einer Verbindungsvorrichtung (1) nach einem der Ansprüche 1 bis 7, **dadurch gekennzeichnet, dass** die mit Emaillierlack (10) beschichteten Leiter (2) mittels Klebstoff in jedweder Form zusammengebaut werden.

10. Verfahren zur Herstellung einer Verbindungsvorrichtung (1) nach einem der Ansprüche 1 bis 9, **dadurch gekennzeichnet, dass** zwischen zwei mit Emaillierlack beschichteten Leitern (2) eine Folie aus isolierendem Material (15) eingefügt wird.

11. Verbindungsvorrichtung (1), die geeignet ist, eine Verbindung zwischen oder innerhalb von statischen Stomrichtern für elektrische Energie herzustellen, wobei diese Vorrichtung (1) mindestens zwei flache Leiter (2) und mindestens ein isolierendes Material umfasst, wobei diese Vorrichtung (1) **dadurch gekennzeichnet ist, dass** sie nach einem der Ansprüche 1 bis 10 hergestellt ist und mindestens zwei übereinander liegende Schichten (11; 12) aus Emaillierlack (10) umfasst.

12. Verbindungsvorrichtung nach Anspruch 11, **dadurch gekennzeichnet, dass** der Emaillierlack (10) mindestens einen Füllstoff in Form von anorganischen Partikeln enthält.

13. Verbindungsvorrichtung (1) nach Anspruch 11 oder 12, **dadurch gekennzeichnet, dass** der Emaillierlack (10) Farbpigmente umfasst.

14. Verwendung der Verbindungsvorrichtung (1) nach einem der Ansprüche 11 bis 13 oder der Verbindungsvorrichtung (1), die durch das Verfahren nach einem der Ansprüche 1 bis 10 hergestellt ist, als Verbinder zwischen statischen Stomrichtern oder innerhalb eines statischen Stomrichters für elektrische Energie.

## Claims

1. A method of manufacturing a connector device (1) suitable for making an inter or intra static electrical energy converter(s) connection, said device (1) comprising at least two flat conductors (2) and at least one insulating material (10, 11, 12, 15), said method being remarkable in that:
● each flat conductor (2) is prepared individually,
● a layer of enamel varnish (10) in liquid form of less than the desired final thickness is applied to each conductor (2),
● the cross-linking of the enamel vanish layer (10) is carried out,
● a new coat of enamel varnish (10) in liquid form is applied and cross-linked until the chosen thickness is reached,
● the conductors (2), coated with varnish (10), of said connector device (1) are assembled by means of a template and connecting means.

2. Method of manufacturing a connector device (1) according to claim 1, **characterized in that** a mask (3) is placed on each zone of the conductor (2) where an electrical contact is to be established before depositing the varnish (10) in liquid form.

3. A method of manufacturing a connector device (1) according to one of the preceding claims, **characterized in that** the varnish layer (10) is deposited in fine particles, using a gas as propellant, or by pressure.

4. A method of manufacturing a connector device (1) according to one of claims 1 or 2, **characterized in that** the varnish layer (10) is applied by dipping or spraying.

5. A method of manufacturing a connector device (1) according to one of claims 1 or 2, **characterized in that** the varnish layer (10) is applied by centrifugal coating.

6. Method of manufacturing a connector device (1) according to any one of the preceding claims, **characterized in that** a cross-linking of the varnish (10) is carried out, for example by evaporation of solvent or by chemical reaction with a curing agent or by UV action.

7. A method of manufacturing a connector device (1) according to any of the preceding claims, **characterized in that** the different layers of varnish (10) deposited are of different types and/or thicknesses.

8. A method of manufacturing a connector device (1) according to any one of the preceding claims, **characterized in that** the conductors (2) coated with enamelled varnish (10) are assembled by means of mechanical parts made of insulating material.

9. A method of manufacturing a connector device (1) according to any one of claims 1 to 7, **characterized in that** the conductors (2) coated with enamel varnish (10) are assembled by means of adhesive in any form.

10. Method of manufacturing a connector device (1) according to any one of claims 1 to 9, **characterized in that** a sheet of insulating material (15) is inserted between two conductors (2) coated with enamel varnish.

11. A connector device (1) suitable for making an inter or intra static electrical energy converter(s) connection, said device (1) comprising at least two flat conductors (2) and at least one insulating material (5), said device (1) being **characterized in that** it is obtained according to any one of claims 1 to 10 and comprises at least two superimposed layers (11;12) of enamel varnish (10).

12. Connector device according to claim 11, **characterized in that** the enamel varnish (10) comprises at least one filler in the form of inorganic particles.

13. Connector device (1) according to claim 11 or 12, **characterized in that** the enamel varnish (10) comprises coloured pigments.

14. Use of the connector device (1) according to one of claims 11 to 13 or of the connector device (1) obtained by means of the process according to any of claims 1 to 10, as an inter or intra static electrical energy converter(s) connector.
